# EUROPÄISCHE PATENTSCHRIFT

(11) **EP 4 081 363 B1**
(45) Veröffentlichungstag und Bekanntmachung des Hinweises auf die Patenterteilung: **02.08.2023**
(21) Anmeldenummer: 21709362.4
(22) Anmeldetag: 26.02.2021
(51) Int. Cl.: B22F 12/67, B29C 64/214, B29C 64/153, B33Y 30/00, B05C 11/04, B22F 10/28

(54) **RAKELEINHEIT FÜR EIN ADDITIVE MANUFACTURING SYSTEM MIT PULVERFÖRMIGEM AUSGANGSMATERIAL**
DOCTOR BLADE UNIT FOR AN ADDITIVE MANUFACTURING SYSTEM HAVING A PULVEROUS STARTING MATERIAL
UNITÉ DE RACLE POUR UN SYSTÈME DE FABRICATION ADDITIVE AYANT UN MATÉRIAU DE DÉPART PULVÉRULENT

(30) Priorität: 04.03.2020 DE 102020105819
(43) Veröffentlichungstag der Anmeldung: 02.11.2022
(73) Patentinhaber: ALD Vacuum Technologies GmbH, 63457 Hanau (DE)
(72) Erfinder: SCHÄFER, Karsten, 36088 Hünfeld (DE); NIEBLING, Arno, 63589 Linsengericht (DE); OSMANLIC, Fuad, 63500 Seligenstadt (DE)
(74) Vertreter: Fuchs Patentanwälte Partnerschaft mbB
(86) Internationale Anmeldenummer: PCT/EP2021/054932
(87) Internationale Veröffentlichungsnummer: WO 2021/175737

(56) Entgegenhaltungen:
- EP-B1- 2 010 370
- CN-A- 108 705 773
- CN-B- 106 346 005
- DE-A1-102017 010 474
- DE-U1-202013 004 745

## Beschreibung

Die vorliegende Erfindung betrifft eine Rakeleinheit für ein Additive Manufacturing System mit pulverförmigem Ausgangsmaterial. Mit der erfindungsgemäßen Rakeleinheit wird eine verbesserte Linearität der Rakel und Parallelität zur Bauebene erreicht.

Vorrichtungen und Verfahren zur additiven Herstellung von Werkstücken, auch unter dem Begriff Additive Manufacturing (AM) bekannt, sind aus dem Stand der Technik bekannt. Man spricht auch von "generativen Herstellungsverfahren" oder "3D-Druck". Das Rohmaterial kann dabei in Pulverform, Drahtform oder flüssig sein. Zu den Pulverfahren zählen beispielsweise das Selective Laser Melting (SLM), das Selective Laser Sintering (SLS) oder das Electron Beam Melting (EBM). Das Rohmaterial besteht dabei aus Kunststoffen oder Metallen.

Bei den mit einem Rohmaterial in Pulverform arbeitenden Verfahren wird das Material in Form einer Schicht auf eine absenkbare Arbeitsfläche aufgetragen, um dort abschnittsweise geschmolzen oder gesintert zu werden. Anschließend wird die Arbeitsfläche um eine Schichtdicke abgesenkt. Auf die Schicht wird dann eine weitere Schicht aufgetragen und so verfahren wie mit der ersten Schicht. Dabei werden die zu schmelzenden bzw. zu sinternden Abschnitte so gewählt, dass schichtweise das dreidimensionale Werkstück aufgebaut wird.

Für die Qualität der Bauteile ist es wesentlich, dass die einzelnen Schichten eine gleichmäßige Dicke aufweisen. Insbesondere muss die Schicht sowohl in der gesamten Ebene gleich dick sein als auch parallel zur Bauebene liegen, die anfänglich auf der absenkbaren Arbeitsfläche liegt und danach dann auf der jeweils zuvor bearbeiteten Schicht. Um dies zu erreichen, ist ein entsprechend präziser Pulverauftrag erforderlich, was wiederum an erster Stelle eine hochpräzise Rakel und Rakelführung erfordert. Hierbei treten zweierlei Probleme bei den Rakeln des Stands der Technik auf, die umso gravierender werden je größer die Rakel wird und je höher die Temperaturen im Bauraum werden. Dies sind einmal ein Durchhängen der Rakel, was eine Abweichung von der Linearität der Rakel und damit eine dünnere Pulverschicht in der Regel in der Mitte der Bewegungsbahn verursacht, und zum anderen die thermische Ausdehnung.

Waren die AM Verfahren anfänglich reine Rapid Prototyping Verfahren, die nur Designmodelle und oftmals in verkleinertem Maßstab lieferten, ist die Technik mittlerweile so weit fortgeschritten, dass auch größere Funktionsbauteile gebaut werden können. Insbesondere stehen neben den zunächst ausschließlich aus Polymeren bestehenden Pulvermaterialien nun auch Materialien aus Metall, Glas und Keramik zur Verfügung. Dementsprechend sind auch die Anforderungen an die Bauraumgröße gewachsen und mit diesen die geforderten Rakelgrößen, was die vorstehend genannten Probleme mit sich bringt.

Ferner bedarf die Verarbeitung von Metallen oder Keramik einer erheblich größeren Schmelz- oder Sintertemperatur als die Kunststoffe. Daher werden für diese Verfahren auch neben stärkeren Lasern Elektronenstrahlkanonen als Bestrahlungseinheiten benutzt, die mehr Energie in das Pulver eintragen können. Die so erzeugten Temperaturen erwärmen auch die Rakel, die das auf die soeben erstarrte letzte Schicht neu aufgebrachte Pulver zur neuen Schicht verteilt. Die dabei auftretende thermische Ausdehnung der Rakel erzeugt Spannungen und Deformationen in der Rakel zwischen den Befestigungspunkten.

Naturgemäß treten thermische Probleme bei den Polymerpulvern nur in geringerem Maße auf, da dort nur Temperaturen typischerweise von bis zu etwa 180 °C im vorgeheizten Pulverbett auftreten, während bei Metallen wie Titan und Titanlegierungen Temperaturen von bis zu über 1200 °C an der vorgeheizten Pulverbettoberfläche erforderlich sind. Die größten Probleme ergeben sich daher bei Elektronenstrahl-Verfahren mit Metallpulvern, die das Hauptanwendungsfeld der vorliegenden Erfindung sind. Dort treten beispielsweise an der Klinge der Rakel typischerweise Temperaturen von etwa 400 °C in der Mitte der Rakel und etwa 50 °C in deren Randbereichen, die nicht über dem Pulverbett gelegen sind, auf. Hierdurch wird in der Aufhängung der Klingen und den Klingen selbst durch die resultierende unterschiedlich starke thermische Ausdehnung eine beträchtliche Spannung erzeugt. Diese verursacht eine Abweichung von der Linearität.

### Stand der Technik

In der EP 2 010 370 B1 wird beispielsweise eine Pulverauftragsvorrichtung beschrieben, die ein einfaches Wechseln ermöglichen und dabei die Parallelität zur Bauebene aufrechterhalten soll. Dabei wird ein auswechselbares Beschichtungsmodul, das in eine rahmenförmige Aufnahmevorrichtung eingesetzt werden kann, benutzt. In dem Beschichtungsmodul sind zwei Klingen an den Rändern über einen Steg verschraubt. Die Einstellungen der Klingen zur Bauebene erfolgt über die rahmenförmige Aufnahmevorrichtung, in die das Beschichtungsmodul mit den Stegen eingehängt werden kann. Somit besteht das Problem, dass die nur an den Außenseiten gelagerten Klingen sich bei größeren Dimensionen durchbiegen können. Beim Auftreten von thermischem Verzug wirkt sich die doppelte Aufhängung, einmal der Klingen im Beschichtungsmodul in der rahmenförmigen Aufnahmevorrichtung und dann die rahmenförmige Aufnahmevorrichtung in der Gesamtvorrichtung, besonders negativ auf die Linearität und Parallelität der Klingen zur Bauebene aus. Eine weitere Vorrichtung wird in der DE 10 2017 010474 A1 beschrieben.

### Aufgabe

Ausgehend von diesen Problemen war es eine Aufgabe der vorliegenden Erfindung eine Rakeleinheit bereitzustellen, mit der die Nachteile der Vorrichtungen aus dem Stand der Technik überwunden werden. Insbesondere ist es die Aufgabe dieser Erfindung, eine Vorrichtung bereitzustellen, die auch bei großen Dimensionen und hohen Arbeitstemperaturen besonders gleichmäßige und parallel zur Bauebene ausgerichtete Pulverschichten aufzutragen vermag.

### Beschreibung der Erfindung

Gelöst wird diese Aufgabe mit einer Rakeleinheit gemäß Anspruch 1. Bevorzugte Ausgestaltungsvarianten sind Gegenstand der abhängigen Ansprüche.

Die erfindungsgemäße Rakeleinheit für ein Additive Manufacturing System mit pulverförmigem Ausgangsmaterial umfasst eine Rakel und eine in dem Additive Manufacturing System horizontal beweglich zu lagernde Aufhängung.

Wenn in der vorliegenden Anmeldung von einer Rakel gesprochen wird, so umfasst dieser Begriff sowohl die eigentlichen Klingen als auch eine damit gebildete Verbundeinheit, beispielsweise also bei einer Doppelklinge die beiden Klingen sowie die diese verbindenden Mittel.

Die Aufhängung umfasst eine Traverse, die auf der einen Seite in einem Festlager und auf der anderen Seite in einem Loslager gelagert ist, wobei die Traverse über das Festlager und das Loslager jeweils mit einer Führungskonsole verbunden ist.

Die Rakel ist über eine Vielzahl von Befestigungsmitteln entlang ihrer Länge hängend unter der Traverse befestigt, wobei die Befestigungsmittel eine Abstandsjustierung zwischen Rakel und Traverse zur parallelen Ausrichtung der Rakel zu einer Bauebene des Additive Manufacturing Systems erlauben. Entsprechend der Länge der Rakel ist hierzu eine Anzahl an Befestigungsmitteln vorzusehen, die die Abstände zwischen diesen ausreichend kurz hält, um ein Durchhängen zu verhindern und eine präzise Justierung der Linearität der hängenden Rakel zu ermöglichen. Über die Gesamtheit der justierbaren Befestigungsmittel kann dann die Parallelität zur Bauebene hergestellt werden.

Der wesentliche Gesichtspunkt ist die Planarität der aufgebrachten Schicht. Hierbei sind der maximal erreichbaren Präzision Grenzen gesetzt durch die Pulverkorngröße des verwendeten Metallpulvers. Mit dem erfindungsgemäßen Rakelsystem wird eine Planarität der Pulverschicht angestrebt, die einer Abweichung von weniger als dem halben durchschnittlichen Pulverkorndurchmesser dso entspricht. Gängige Metallpulver für das EBM Verfahren liegen derzeit bei einem durchschnittlichen Pulverkorndurchmesser dso von etwa 50 µm. Für Sonderfälle werden auch Pulver mit kleineren Durchmessern verwendet. Dementsprechend liegt die angestrebte Präzision für den gängigen Anlagenbetrieb bei einer Abweichung von höchstens 25 µm, vorzugsweise höchstens 10 µm.

Die Rakel kann eine Einzelklinge, Doppelklinge oder Mehrfachklinge umfassen. Diese sind symmetrisch mittenzentriert unter einem massiven Block angeordnet, durch den die Befestigungsmittel zur Traverse laufen. Die Verbindung mit dem Block erfolgt innerhalb von Aussparungen, die im Bereich der senkrechten Befestigungsmittel angeordnet sind, mittels horizontaler Bolzen und zwischen den einzelnen Klingen eingefügten Abstandshaltern. Die Klingen bestehen aus flexiblen dünnen Blechen, in die eine kammartige Zähnung eingearbeitet ist, damit sie sich Unebenheiten flexibel anpassen können. Parallel zu den Klingen sind seitlich des Blocks Vorabstreifer aufgeschraubt. Sie weisen mit ihrer Unterkante einen Abstand zur Unterkante der Klingen von üblicherweise bis zu einem Millimeter, in der Regel etwa 0,5 mm, auf. Die Vorabstreifer erfüllen den Zweck, den Druck durch das Pulver auf die Klinge zu minimieren und eine erste Verteilung und Glättung des Pulvers zu bewirken. Der gesamte Block ist mit einer dachartigen Konstruktion, die flach, gewölbt oder gewinkelt ausgeführt sein kann, abgedeckt.

Die Führungskonsolen sind vorzugsweise für eine momentensteife Führung im Additive Manufacturing System geeignet. Eine momentensteife Führung bedeutet, dass die Führungskonsolen derart mit dem Additive Manufacturing System verbunden sind, dass eine Übertragung eines Moments von den Führungskonsolen auf das Additive Manufacturing System möglich ist. Es sind damit nur translatorische Bewegungen in der vorgesehenen Richtung über die Bauebene möglich, nicht jedoch in den anderen Raumrichtungen oder Rotationen.

Die horizontal bewegliche Lagerung der Aufhängung in dem Additive Manufacturing System kann beispielsweise über Schienen oder Führungsstäbe erfolgen. Diese können einzeln oder mehrfach, insbesondere doppelt, auf jeder Seite vorhanden sein. Sie müssen nicht horizontal ausgerichtet sein und als Auflager agieren, sondern können auch vorzugsweise vertikal ausgerichtet sein. Letzteres ist vor allem bei einer Ausgestaltung der Schienen und der Schienenaufnahme der Führungskonsole in Form einer schwalbenschwanzartigen Verbindung und doppelten Schienen vorteilhaft zur Ausbildung der momentensteifen Verbindung der Führungskonsolen mit dem Bauraum des Additive Manufacturing Systems.

Die Traverse der Rakeleinheit kann als Hohlkörper ausgeführt sein. Dies trägt bei gleichzeitig hoher Steifigkeit zur Gewichtsreduktion bei. Der Hohlkörper kann dabei an den Stirnseiten offen, d. h. rohrförmig, oder geschlossen sein. Vorzugsweise weist die Traverse einen rechteckigen oder ovalen Querschnitt auf. Dies bietet bei der Lagerung einen größeren Widerstand gegen Drehmomente.

Bevorzugt umschließt das Festlager die Traverse an ihrem Umfang an mindestens zwei Seiten und verhindert eine Bewegung der Traverse relativ zum Festlager in allen drei Raumrichtungen.

An dem inneren Umfang des Festlagers kann ein Zentrierungsbolzen angebracht sein, der in formschlüssigem Eingriff mit einer entsprechenden Bohrung in der Traverse steht. Auf diese Weise wird eine zuverlässige Positionierung der Traverse auf den Führungskonsolen erreicht. Zudem unterstützt der Zentrierungsbolzen die Befestigung der Traverse und verhindert insbesondere in einer Ebene parallel zur Bauebene eine Bewegung der Traverse in orthogonaler Richtung zur Bewegungsrichtung der Traverse über die Bauebene.

Das Loslager kann die Traverse an ihrem Umfang derart mit Gleitelementen umschließen, dass eine Bewegung der Traverse relativ zum Loslager entlang ihrer Längsachse ermöglicht wird, während eine Bewegung in den zwei dazu senkrechten Raumrichtungen verhindert wird. Dehnen die Rakel und die Traverse sich bei Temperaturerhöhung aus, so kann hierüber eine Ausgleichsbewegung erfolgen, sodass keine Spannungen in der Rakel auftreten, die zu einer Deformation führen können.

Bevorzugt weist die Rakel eine Länge von 0,1 - 5 m, vorzugsweise 0,2 - 4,5 m oder 0,25 - 4 m oder 0,3 - 3 m oder 0,3 - 2,5 m, auf. Die Vorteile der erfindungsgemäßen Rakeleinheit sind umso größer, je länger die Rakel ist.

Bevorzugt beträgt die Parallelitätsabweichung ΔP, definiert als Differenz zwischen größtem und kleinstem Abstand zwischen Rakel und Bauebene, 1 - 50 µm, vorzugsweise 2 - 45 µm oder 3 - 40 µm oder 4 - 35 µm oder 5 - 30 µm oder 10 - 25 µm. Mit der Parallelitätsabweichung ΔP werden definitionsgemäß sowohl Neigungen der Rakel erfasst als auch Abweichungen von der Linearität. Sie ist ein Maß für die Güte der Justierung der Rakel. Die erfindungsgemäße Rakeleinheit erreicht damit eine hervorragende Gleichmäßigkeit der Schichtdicken und erzielt dadurch verbesserte Bauteileigenschaften. So lassen sich beispielsweise geringere Schichtdicken noch zuverlässig produzieren, wodurch die Oberflächengüte und die Auflösung steigen.

Die Aufhängung verfügt bevorzugt pro Meter Rakellänge über 3 - 30, vorzugsweise 3 - 25 oder 3 - 20 oder 3 - 15 oder 3 - 10 oder 3 - 5, Befestigungsmittel. Diese Anzahl an Befestigungspunkten hat sich als ausreichend erwiesen, um auch bei sehr langen Rakeln und hohen Arbeitstemperaturen noch sicher die Linearität der Rakel einstellen zu können.

Vorzugsweise sind die Befestigungsmittel verschraubte Bolzen. Die Bolzen müssen dabei über ausreichend lange Gewinde verfügen, um den notwendigen Verstellweg bieten zu können. Dann können die Bolzen einfach mittels einer Mutter justiert werden. Dies erfolgt beim Einbau der Rakel. Bei Bedarf können dann die einzelnen Bolzen nachjustiert werden, um Linearität und Parallelität wiederherzustellen.

In einer bevorzugten Ausgestaltungsvariante kann bei der Rakeleinheit im laufenden Betrieb des Additive Manufacturing Systems eine Veränderung des Abstands der Rakel zur Traverse mittels auf die Befestigungsmittel wirkender elektromechanischer und/oder hydraulischer Stellglieder erfolgen. In dieser automatischen Variante der Rakeleinheit wird über optische und/oder mechanische Sensoren die Abweichung von der Linearität und Parallelität gemessen und überwacht. Diese Information wird dann zur Ansteuerung von Stellgliedern, wie beispielsweise Stellmotoren oder Hydraulikleitungen mit Aktoren, genutzt, die die Länge der Befestigungsmittel entsprechend korrigieren, um Linearität und Parallelität wiederherzustellen. Mit Hilfe dieses aktiven Systems kann nochmals eine weitere Verbesserung der Gleichmäßigkeit der Schichtdicken erzielt werden und dadurch weiter verbesserte Bauteileigenschaften. Insbesondere bietet dies den Vorteil, dass das Additive Manufacturing System dabei nicht angehalten werden muss zur Nachjustierung, sodass ein unterbrechungsfreier Betrieb möglich wird.

### Kurzbeschreibung der Figuren

**Figur 1** ist eine seitliche Schnittansicht der Rakeleinheit.
**Figur 2** ist eine perspektivische Ansicht der Rakeleinheit von der Festlagerseite aus gesehen.
**Figur 3** ist eine perspektivische Ansicht der Rakeleinheit von der Loslagerseite aus gesehen.
**Figur 4** ist eine perspektivische Schnittansicht der Rakeleinheit mit Schnitt durch ein Befestigungsmittel.
**Figur 5** ist ein vergrößerter Ausschnitt von **Figur 4**, der den unteren Bereich des Befestigungsmittels und die Rakel zeigt.

### Figurenbeschreibung

Die Figuren zeigen lediglich eine bevorzugte Ausgestaltungsvariante als Beispiel für die Erfindung. Sie sind daher nicht als einschränkend zu verstehen.

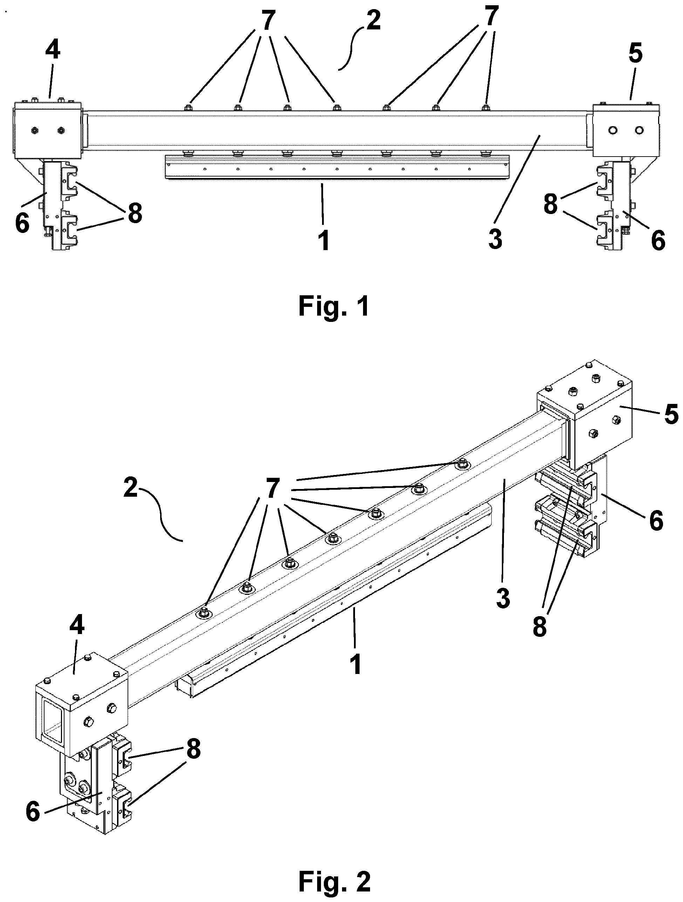

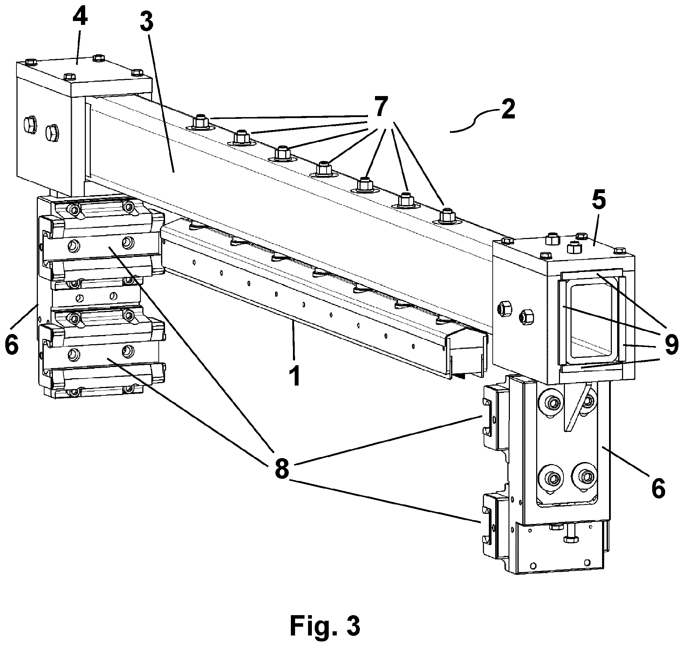

**Figur 1** zeigt eine seitliche Schnittansicht einer erfindungsgemäßen Rakeleinheit, die in **Figur 2** und **Figur 3** noch einmal perspektivisch dargestellt ist. Die in den Figuren gezeigte Ausgestaltungsvariante der Rakeleinheit ist mit einer Rakel (1) mit Doppelklinge ausgerüstet. Die Aufhängung (2) umfasst die Traverse (3), die in der Abbildung auf der linken Seite in dem Festlager (4) und auf der rechten Seite in dem Loslager (5) gelagert ist, welche wiederum jeweils mit einer Führungskonsole (6) verbunden sind. Die Rakel (1) ist in diesem Beispiel mit sieben Befestigungsmitteln (7) in Form von Bolzen mit endständigen Gewinden und zugehörigen Muttern an der Traverse (3) befestigt. Die Länge der Rakel (1) beträgt 2 m. Dementsprechend verfügt die Rakelaufhängung über 3,5 Befestigungsmittel pro Meter Rakellänge. Die damit erzielte Parallelitätsabweichung ΔP betrug 10 µm.

Die Traverse (3) trägt ihr Eigengewicht und die mechanische Last der Rakel (1). Ihr Durchbiegen kann über die Befestigungsmittel (7) ausgeglichen werden, sodass die darunter hängende Rakel (1) geradlinig und parallel zur Bauebene ausgerichtet werden kann. Wie in den Figuren 2 und 3 sichtbar ist, ist die Traverse (3) in diesem Beispiel als rohrförmiger Hohlkörper mit rechteckiger Querschnittsfläche und abgerundeten Kanten ausgebildet. Die Führungskonsolen (6) sind für eine momentensteife Führung mit je zwei Schienenaufnahmen (8) versehen, die mit Schienen mit im Wesentlichen trapezförmigem Querschnitt in der Art einer Schwalbenschwanzverbindung in Eingriff zu bringen sind. Diese Schienen sind seitlich des Baubehälters mit der Arbeitsfläche angebracht. Auf diese Weise ist ein verwindungsfreies Verfahren der Rakeleinheit über die Bauebene zur Einebnung des aufgetragenen Pulvers gewährleistet.

Wie in **Figur 3** zu erkennen ist, wird das Loslager (5) hier mittels vier Gleitelementen (9) gebildet, die die Traverse (3) umfassen. Eine Ausdehnung der Traverse (3) in ihrer Längsachse ist somit möglich. Auf der Festlagerseite wird die Traverse (3) starr gehalten, kann sich aber in Richtung der Loslagerseite ausdehnen und durch das Loslager (5) gleiten, sodass keine Zwangskräfte in die Traverse (3) eingebracht werden.

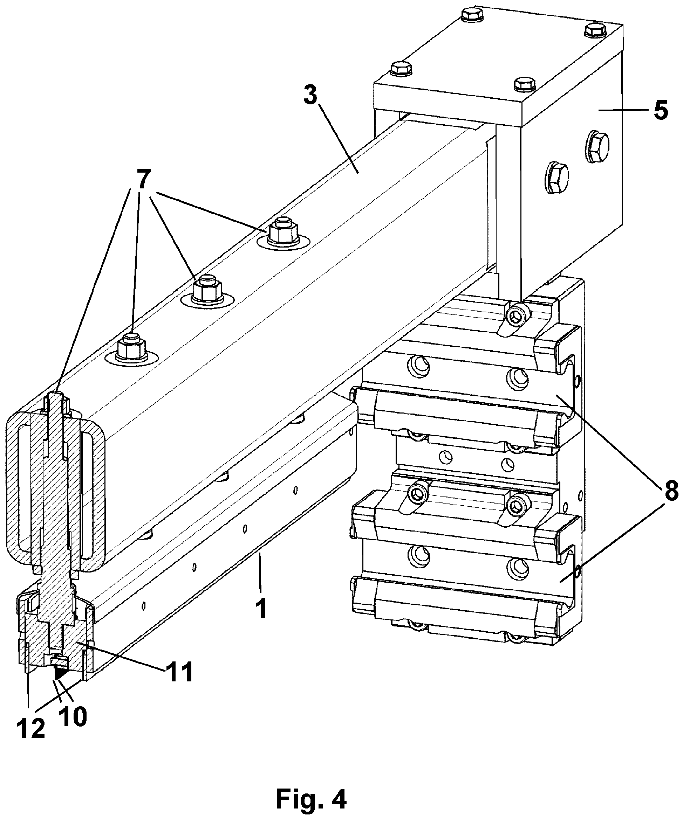

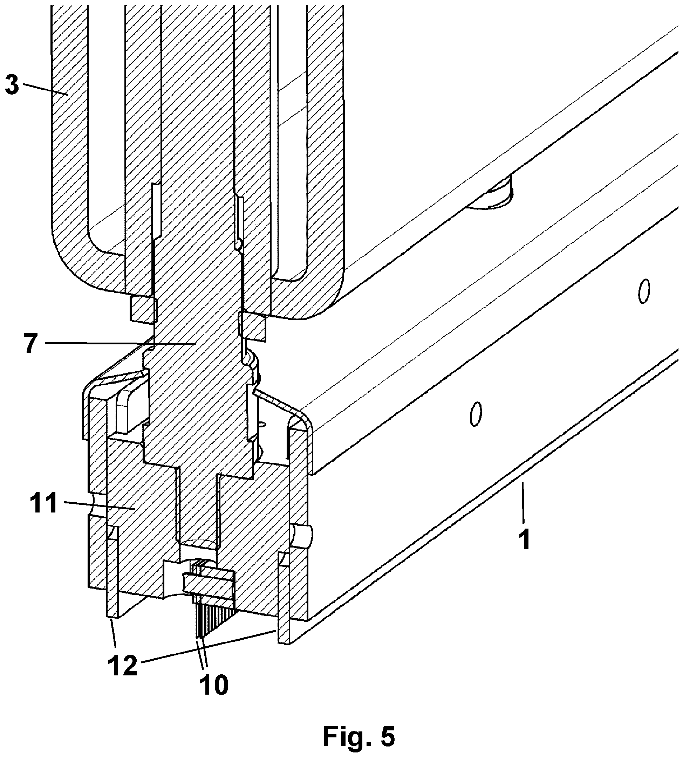

In **Figur 4** und **Figur 5** ist der Bereich um ein Befestigungsmittel (7) vergrößert in Schnittdarstellung abgebildet. Die Bolzen der Befestigungsmittel (7) laufen in dem gezeigten Beispiel in einer Führungshülse im Inneren der Traverse (3). Die gekröpften Bereiche geben den maximalen Stellweg für die Justierung der Klingen (10) vor. Die beiden Klingen (10) sind symmetrisch mittenzentriert unter einem massiven Mittelblock (11) befestigt. Die Befestigung erfolgt in entsprechenden Aussparungen des massiven Mittelblocks (11) über horizontale Bolzen, an denen die Klingen (10) mit Abstandshaltern voneinander getrennt befestigt sind. Seitlich davon sind die beiden Vorabstreifer (12) an den Außenseiten des Mittelblocks (11) angebracht.

Für eine aktive Steuerung der Rakeleinheit (nicht in den Figuren dargestellt) kann beispielsweise an den Führungskonsolen (6) eine Lasersensorik angebracht werden, die Linearität und Parallelität der Rakel (1) überwacht. Die so gewonnenen Informationen können dann zum Beispiel über elektrische Stellmotoren, die die Muttern antreiben, oder Piezoelemente zur Nachjustierung verwendet werden.

### Bezugszeichenliste

- 1: Rakel
- 2: Aufhängung
- 3: Traverse
- 4: Festlager
- 5: Loslager
- 6: Führungskonsole
- 7: Befestigungsmittel
- 8: Schienenaufnahme
- 9: Gleitelement
- 10: Klinge
- 11: Mittelblock
- 12: Vorabstreifer

## Patentansprüche

1. Rakeleinheit für ein Additive Manufacturing System mit pulverförmigem Ausgangsmaterial umfassend eine Rakel (1) und eine in dem Additive Manufacturing System horizontal beweglich zu lagernde Aufhängung (2), **dadurch gekennzeichnet, dass**
- die Aufhängung (2) eine Traverse (3) umfasst, die auf der einen Seite in einem Festlager (4) und auf der anderen Seite in einem Loslager (5) gelagert ist,
- die Traverse (3) über das Festlager (4) und das Loslager (5) jeweils mit einer Führungskonsole (6) verbunden ist, und
- die Rakel (1) über eine Vielzahl von Befestigungsmitteln (7) entlang ihrer Länge hängend unter der Traverse (3) befestigt ist, wobei die Befestigungsmittel (7) eine Abstandsjustierung zwischen Rakel (1) und Traverse (3) zur parallelen Ausrichtung der Rakel (1) zu einer Bauebene des Additive Manufacturing Systems erlauben.

2. Rakeleinheit nach Anspruch 1, **dadurch gekennzeichnet, dass** die Rakel (1) eine Einzelklinge, Doppelklinge oder Mehrfachklinge umfasst.

3. Rakeleinheit nach Anspruch 1 oder 2, **dadurch gekennzeichnet, dass** die Führungskonsolen (6) für eine momentensteife Führung im Additive Manufacturing System geeignet sind.

4. Rakeleinheit nach einem der vorhergehenden Ansprüche, **dadurch gekennzeichnet, dass** die Traverse (3) als Hohlkörper ausgeführt ist.

5. Rakeleinheit nach einem der vorhergehenden Ansprüche, **dadurch gekennzeichnet, dass** die Traverse (3) einen rechteckigen oder ovalen Querschnitt aufweist.

6. Rakeleinheit nach einem der vorhergehenden Ansprüche, **dadurch gekennzeichnet, dass** das Festlager (4) die Traverse (3) an ihrem Umfang an mindestens zwei Seiten umschließt und eine Bewegung der Traverse (3) relativ zum Festlager (4) in allen drei Raumrichtungen verhindert.

7. Rakeleinheit nach einem der vorhergehenden Ansprüche, **dadurch gekennzeichnet, dass** an dem inneren Umfang des Festlagers (4) ein Zentrierungsbolzen angebracht ist, der in formschlüssigem Eingriff mit einer entsprechenden Bohrung in der Traverse (3) steht.

8. Rakeleinheit nach einem der vorhergehenden Ansprüche, **dadurch gekennzeichnet, dass** das Loslager (5) die Traverse (3) an ihrem Umfang derart mit Gleitelementen umschließt, dass eine Bewegung der Traverse (3) relativ zum Loslager (5) entlang ihrer Längsachse ermöglicht wird, während eine Bewegung in den zwei dazu senkrechten Raumrichtungen verhindert wird.

9. Rakeleinheit nach einem der vorhergehenden Ansprüche, **dadurch gekennzeichnet, dass** die Rakel (1) eine Länge von 0,1 - 5 m, vorzugsweise 0,3 - 3 m, aufweist.

10. Rakeleinheit nach einem der vorhergehenden Ansprüche, **dadurch gekennzeichnet, dass** die Parallelitätsabweichung ΔP, definiert als Differenz zwischen größtem und kleinstem Abstand zwischen Rakel (1) und Bauebene, 1 - 50 µm, vorzugsweise 10 - 25 µm, beträgt.

11. Rakeleinheit nach einem der vorhergehenden Ansprüche, **dadurch gekennzeichnet, dass** die Aufhängung (2) pro Meter Rakellänge über 3 - 30, vorzugsweise 3 - 10, Befestigungsmittel (7) verfügt.

12. Rakeleinheit nach einem der vorhergehenden Ansprüche, **dadurch gekennzeichnet, dass** im laufenden Betrieb des Additive Manufacturing Systems eine Veränderung des Abstands der Rakel (1) zur Traverse (3) mittels auf die Befestigungsmittel (7) wirkender elektromechanischer und/oder hydraulischer Stellglieder möglich ist.

13. Rakeleinheit nach einem der vorhergehenden Ansprüche, **dadurch gekennzeichnet, dass** die Befestigungsmittel (7) verschraubte Bolzen sind.

## Claims

1. A doctor blade unit for an additive manufacturing system having a pulverous starting material comprising a doctor blade (1) and a suspension (2) to be supported horizontally movable in the additive manufacturing system, **characterized in that**
- the suspension (2) comprises a traverse (3), which is supported on one side in a fixed bearing (4) and on the other side in a floating bearing (5),
- the traverse (3) via the fixed bearing (4) and the floating bearing (5) is connected with a guiding bracket (6) each, and
- the doctor blade (1) via a plurality of mounting means (7) along its length is mounted suspended under the traverse (3), wherein the mounting means (7) allow a distance adjustment between doctor blade (1) and traverse (3) for the parallel alignment of the doctor blade (1) in relation to a construction plane of the additive manufacturing system.

2. The doctor blade unit according to claim 1, **characterized in that** the doctor blade (1) comprises a single blade, double blade or multiple blade.

3. The doctor blade unit according to claim 1 or 2, **characterized in that** the guiding brackets (6) are suitable for a torque-rigid guiding in the additive manufacturing system.

4. The doctor blade unit according to one of the preceding claims, **characterized in that** the traverse (3) is designed as hollow body.

5. The doctor blade unit according to one of the preceding claims, **characterized in that** the traverse (3) has a rectangular or oval cross-section.

6. The doctor blade unit according to one of the preceding claims, **characterized in that** the fixed bearing (4) encloses the traverse (3) on its periphery on at least two sides and prevents a movement of the traverse (3) relative to the fixed bearing (4) in all three spatial directions.

7. The doctor blade unit according to one of the preceding claims, **characterized in that** a centering bolt is attached on the inner periphery of the fixed bearing (4), which is in positive engagement with a corresponding borehole in the traverse (3).

8. The doctor blade unit according to one of the preceding claims, **characterized in that** the floating bearing (5) encloses the traverse (3) on its periphery with sliding elements in such a manner that a movement of the traverse (3) relative to the floating bearing (5) along its longitudinal axis is allowed, while a movement in the two spatial directions perpendicular thereto is prevented.

9. The doctor blade unit according to one of the preceding claims, **characterized in that** the doctor blade (1) has a length of 0.1 - 5 m, preferably 0.3 - 3 m.

10. The doctor blade unit according to one of the preceding claims, **characterized in that** the parallelism deviation ΔP, defined as difference between largest and smallest distance between doctor blade (1) and construction plane, is 1 - 50 µm, preferably 10 - 25 µm.

11. The doctor blade unit according to one of the preceding claims, **characterized in that** the suspension (2) per meter of the length of the doctor blade is provided with 3 - 30, preferably 3 - 10, mounting means (7).

12. The doctor blade unit according to one of the preceding claims, **characterized in that** a change of the distance of the doctor blade (1) to the traverse (3) during the continuing operation of the additive manufacturing system is possible by means of electromechanical and/or hydraulic actuating elements having an influence onto the mounting means (7).

13. The doctor blade unit according to one of the preceding claims, **characterized in that** the mounting means (7) are screwed bolts.

## Revendications

1. Unité de racle pour un système de fabrication additive avec un matériau de départ pulvérulent comprenant une racle (1) et une suspension (2) à loger de manière mobile horizontalement dans le système de fabrication additive, **caractérisée en ce que**
- la suspension (2) comporte une traverse (3) qui est logée sur l'un côté dans un palier fixe (4) et sur l'autre côté dans un palier flottant (5),
- la traverse (3) est reliée par le biais du palier fixe (4) et du palier flottant (5) respectivement à une console de guidage (6), et
- la racle (1) est fixée par le biais d'une pluralité de moyens de fixation (7) le long de sa longueur par suspension sous la traverse (3), dans laquelle les moyens de fixation (7) permettent un ajustement de distance entre la racle (1) et la traverse (3) pour l'orientation parallèle de la racle (1) par rapport à un plan de construction du système de fabrication additive.

2. Unité de racle selon la revendication 1, **caractérisée en ce que** la racle (1) comporte une lame individuelle, une double lame ou une lame multiple.

3. Unité de racle selon la revendication 1 ou 2, **caractérisée en ce que** les consoles de guidage (6) sont appropriées à un guidage rigide au couple dans le système de fabrication additive.

4. Unité de racle selon l'une quelconque des revendications précédentes, **caractérisée en ce que** la traverse (3) est réalisée comme corps creux.

5. Unité de racle selon l'une quelconque des revendications précédentes, **caractérisée en ce que** la traverse (3) présente une section transversale rectangulaire ou ovale.

6. Unité de racle selon l'une quelconque des revendications précédentes, **caractérisée en ce que** le palier fixe (4) entoure la traverse (3) sur sa périphérie sur au moins deux côtés et empêche un déplacement de la traverse (3) par rapport au palier fixe (4) dans l'ensemble des trois sens spatiaux.

7. Unité de racle selon l'une quelconque des revendications précédentes, **caractérisée en ce qu'**un boulon de centrage est monté au niveau de la périphérie intérieure du palier fixe (4), lequel est en prise par complémentarité de formes avec un perçage correspondant dans la traverse (3).

8. Unité de racle selon l'une quelconque des revendications précédentes, **caractérisée en ce que** le palier flottant (5) entoure la traverse (3) sur sa périphérie avec des éléments de glissement de telle manière qu'un déplacement de la traverse (3) par rapport au palier flottant (5) soit permis le long de son axe longitudinal, alors qu'un déplacement dans les deux sens spatiaux perpendiculaires l'un à l'autre est empêché.

9. Unité de racle selon l'une quelconque des revendications précédentes, **caractérisée en ce que** la racle (1) présente une longueur de 0,1 à 5 m, de préférence de 0,3 à 3 m.

10. Unité de racle selon l'une quelconque des revendications précédentes, **caractérisée en ce que** la déviation de parallélisme ΔP, définie comme la différence entre la distance la plus grande et la plus petite entre la racle (1) et le plan de construction, s'élève à 1 à 50 µm, de préférence à 10 à 25 µm.

11. Unité de racle selon l'une quelconque des revendications précédentes, **caractérisée en ce que** la suspension (2) dispose par mètre de longueur de racle, de 3 à 30, de préférence de 3 à 10, moyens de fixation (7).

12. Unité de racle selon l'une quelconque des revendications précédentes, **caractérisée en ce qu'**en fonctionnement continu du système de fabrication additive, une modification de la distance de la racle (1) à la traverse (3) est possible au moyen d'organes de réglage électromécaniques et/ou hydrauliques agissant sur les moyens de fixation (7).

13. Unité de racle selon l'une quelconque des revendications précédentes, **caractérisée en ce que** les moyens de fixation (7) sont des boulons vissés.
